# EUROPÄISCHE PATENTSCHRIFT

(11) **EP 1 391 471 B1**
(45) Veröffentlichungstag und Bekanntmachung des Hinweises auf die Patenterteilung: **17.10.2007**
(21) Anmeldenummer: 03016676.3
(22) Anmeldetag: 01.08.2003
(51) Int. Cl.: C08G 18/08

(54) **Polyurethan-Polyacrylathybride als Beschichtungsmittel**
Polyurethane-polyacrylatehybrid coating
Composition de revêtement hybride polyuréthane-polyacrylate

(30) Priorität: 14.08.2002 DE 10237193
(43) Veröffentlichungstag der Anmeldung: 25.02.2004
(73) Patentinhaber: Bayer MaterialScience AG, 51368 Leverkusen (DE)
(72) Erfinder: Gertzmann, Rolf, Dr., 51377 Leverkusen (DE); Petzoldt, Joachim, Dr., 40789 Monheim (DE); Müller, Heino, 51375 Leverkusen (DE)

(56) Entgegenhaltungen:
- EP-A- 0 560 508
- EP-A- 1 132 413
- WO-A-01/27178
- US-A- 5 521 246

## Beschreibung

Die vorliegende Erfindung betrifft neue, lösemittelfreie wässrige Polyurethan-Polyacrylathybrid-Dispersionen, ein Verfahren zu deren Herstellung und ihre Verwendung zur Herstellung elastischer Beschichtungen.

Wässrige Überzugmittel zum temporären Schutz hochwertiger Produkte, wie z.B. Glas, Metall und Kunststoff gegen mechanische Beschädigung oder Umwelteinflüsse sind bekannt. Die wässrigen, lösemittelfreien Dispersionen werden z.B. durch Rollen oder Spritzen aufgebracht und verfilmen anschließend. Der entstandene kontinuierliche Film kann später in einfacher Weise als zusammenhängender Film abgezogen und recycled bzw. verbrannt werden. Insbesondere eignet sich diese Technik zum Schutz von Kraftfahrzeug- und Kunststoffoberflächen sowie elektronischen Geräten und Einrichtungsgegenständen.

Polyurethane zeichnen sich durch sehr gute mechanische Eigenschaften aus, die durch die physikalische Vernetzung einzelner Polyurethanketten über Wasserstoffbrückenbindungen erreicht werden (z.B. in G. Oertel, Polyurethane Handbook 2nd edition, Carl Hanser Verlag, 1993, S. 37- 38). Die mechanischen Eigenschaften der Polyacrylate stehen denen der Polyurethane oftmals nach, aber durch die Herstellung von Polymerhybriden aus Urethanen und Acrylaten können Produkte mit verbesserten Eigenschaften hergestellt werden (z.B. in C.R. Hegedus, K.A. Kloiber J. Coatings Techn. 68 (860), 1996, S. 39- 48). Verschiedene Herstellvarianten für diese Produktklasse sind in der Patentliteratur beschrieben.

In der EP-A 167 188 wird beispielsweise ein Verfahren zur Herstellung wässriger Polyurethan-Polyacrylathybride offenbart, bei dem hydrophilierte NCO-Prepolymere hergestellt werden, die partiell endständige, über hydroxyfunktionelle (Meth-)-Acrylate eingeführte, polymerisierbare Doppelbindungen enthalten. Eine Kettenverlängerung der NCO-Gruppen und/oder der terminalen, vinylischen Doppelbindungen enthaltende Polyurethanketten erfolgt in der wässrigen Phase über die freien NCO-Gruppen durch Zugabe von aminofünktionellen Verbindungen. Die Polymerisation der Doppelbindungen aufweisenden wässrigen Dispersionen erfolgt im Anschluß an die Kettenverlängerung durch Zugabe entsprechender Initiatoren und gegebenenfalls weiterer polymerisierbarer Monomere. Nachteilig ist, dass es neben der Kettenverlängerung über die Amine auch zu einer kaum kontrollierbaren Reaktion der freien Isocyanat-Gruppen mit Wasser kommt, was zu verschiedenen Problemen, wie z.B. Schaum- und Stippenbildung führt.

Des Weiteren werden aufgrund der NCO-Wasser-Reaktion unterschiedliche Harnstoffstrukturen gebildet und damit verbunden sind unterschiedliche Haftungseigenschaften der Beschichtungen auf dem zu beschichtenden Untergrund. Insbesondere beim Entfernen der temporären Beschichtung kann es zu erheblichen Problemen kommen.

Die JP-A 10 237 138 offenbart ein Verfahren zur Herstellung von Polyurethan-Polyacrylathybriden, in welchem zunächst ein Polyisocyanat mit einem Polyol in Anwesenheit von ungesättigten Monomeren ein NCO-haltiges Prepolymer hergestellt wird, das in einem zweiten Schritt bei Anwesenheit hydroxyfünktioneller, polymerisierbarer Monomere kettenverlängert wird. In den beiden darauffolgenden Schritten wird die Lösung dispergiert und polymerisiert. Aufgrund der polymerisierbaren, terminalen Doppelbindungen an den Polymerketten, führt eine anschließende Polymerisation zu verzweigten Produkten. Solche Dispersionen zeigen oftmals schlechte Filmbildungseigenschaften oder neigen zur Bildung von Stippen.

In der EP-A 189 945 werden NCO-haltige Prepolymere in Gegenwart inerter, flüssiger, polymerisierbarer, ethylenisch ungesättigter Monomere hergestellt. Die Monomere dienen dabei zunächst als Reaktiwerdünner, um die Viskosität der hydrophilierten/hydrophilierbaren Prepolymerschmelze so niedrig zu halten, dass eine Dispergierung des Harzes möglich wird. Das NCO-Prepolymer wird nach Überführung in die wässrige Phase mit Aminen kettenverlängert. Im Anschluss daran, erfolgt die Polymerisation der ungesättigten Monomere, die in den Polyurethanpartikeln eingeschlossen sind. Auch dieses Verfahren beinhaltet die Dispergierung eines NCO-Prepolymers in Wasser, so dass es auch hier zu einer nicht kontrollierbaren NCO-Wasser Reaktion kommt.

EP-A 353 797 offenbart wässrige Polyurethan-Polyacrylathybrid-Dispersionen, die durch einen zweistufigen Herstellprozess erhalten werden. Zunächst wird das Polyurethan durch Reaktion von Polyisocyanaten mit hydroxyfunktionellen Verbindungen, die eine Säuregruppe enthalten und anschließende Umsetzung mit Polyolen erhalten. Die Reaktion wird in Anwesenheit von Acrylat- und/oder Methacrylat-Monomeren durchgeführt. Die Herstellung der Polyurethan-Polyacrylathybrid-Dispersion erfolgt in situ, indem die Polymerlösung dem Emulsionpolymerisationsprozess durch Zulauf zugeführt wird. Die Emulsionspolymerisation verläuft dabei in wässriger Phase unter Zugabe eines externen Emulgators.

Aufgabe der vorliegenden Erfindung bestand in der Bereitstellung von wässrigen, lösemittel- und emulgatorfreien Polyurethan-Polyacrylathybrid-Dispersionen, aus denen sich wasser- und lösemittelbeständige Beschichtungen mit hoher Reißdehnung und niedriger Härte herstellen lassen. Die Dispersionen sollten sich außerdem zu abziehbaren Lacken formulieren lassen.

Überraschend wurde gefunden, dass sich in Vinylmonomeren als Reaktiwerdünner hochmolekulare Polyurethane durch Umsetzung equimolarer Mengen aus Diisocyanaten und OH/NH/NH₂-Gruppen aufweisenden Verbindungen herstellen lassen und diese Polymerlösung, ohne Kettenverlängerung vor oder während der Dispergierung, anschließend problemlos dispergiert werden kann, ohne dass es zur Gelbildung kommt. Die so erhältlichen Polyurethan-Polymer-Dispersionen können dann mit Hilfe der Emulsionspolymerisation zu Polyurethan-Polyacrylathybrid-Dispersionen umgesetzt werden. Die mit den erfindungsgemäßen Dispersionen hergestellten Beschichtungen zeichnen sich besonders durch eine besonders gute Reißdehnung, Weiterreißfestigkeit und Reißfestigkeit aus.

Gegenstand der vorliegenden Erfindung ist somit ein Verfahren zur Herstellung von wässrigen, emulgatorfreien und lösemittelfreien Polyurethan-Polyacrylat-Hybriddispersionen, enthaltend die Schritte
(I) Herstellung eines hydrophilen oder hydrophilierbaren Polyurethans durch Umsetzung einer oder mehrerer Isocyanat-Komponenten (A) mit einer oder mehreren Komponenten (B), enthaltend
   (B1) ein oder mehrere Di- oder Polyole mit einem Molekulargewicht von 500 bis 6000 und einer OH-Funktionalität von 1,8 bis 5,
   (B2) ein oder mehrere niedermolekularen Di- oder Polyole des Molekulargewichtsbereichs von 62 bis 400 und einer OH-Funktionalität größer gleich 2 als Kettenverlängerer,
   (B3) ein oder mehrere hydrophile Verbindungen mit ionischen und/oder potentiell ionischen Gruppen und/oder nichtionischen Gruppen, die mindestens eine gegenüber NCO-Gruppen reaktive Gruppe aufweisen,
   (B4) gegebenenfalls Polyamine und/oder Alkanolamine des Molekulargewichtsbereichs von 60 bis 300 und einer NH-Funktionalität von größer gleich 2,
   (B5) gegebenenfalls monofunktionellen Verbindungen des Molekulargewichtsbereichs von 17 bis 350,
   in Anwesenheit von gegenüber NCO-Gruppen inerten ethylenisch ungesättigten Monomeren (C1) unter Berücksichtigung, dass die Komponenten (A) und (B) so eingesetzt werden, dass ein Verhältnis von NCO-Gruppen zu OH/NH/NH₂-Gruppen von 1 : 1 resultiert,
(II) anschließend Dispergierung des Polyurethans aus (I) in Wasser und
(III) Emulsionspolymerisation von Monomeren (C), enthaltend gegenüber NCO-Gruppen inerte ethylenisch ungesättigte Monomere (C1) und gegebenenfalls Zerewitinoff-aktive H-Atome aufweisende, ethylenisch ungesättigte Monomere (C2).

Ebenfalls Gegenstand der vorliegenden Erfindung sind Polyurethan-Polyacrylat-Hybriddispersionen erhältlich nach dem erfindungsgemäßen Verfahren. Bevorzugte erfindungsgemäße Polyurethan-Polyacrylat-Hybriddispersionen sind hamstoffgruppenfrei.

Geeignete Isocyanat-Komponenten (A) sind Diisocyanate (A1) und Polyisocyanate (A2). Bevorzugt werden Diisocyanate (A1) im erfindungsgemäßen Verfahren eingesetzt. Als Komponente (A1) sind die üblicherweise in der Polyurethanchemie eingesetzten aliphatischen, cycloaliphatischen, araliphatischen und aromatischen Diisocyanate oder deren Mischungen geeignet. Insbesondere zu nennen sind Diisocyanate der allgemeinen Formel (I),

R¹(NCO)₂ (I)

wobei
- R¹: für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht.

Beispiele derartiger bevorzugt einzusetzender Diisocyanate (A1) sind 1,3-Cyclohexandiisocyanat, 1 -Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol oder α,α,α',α',-Tetra-methyl-*m*- oder *p*-xylylendiisocyanat sowie Mischungen der genannten Diisocyanate. Besonders bevorzugte Diisocyanate sind 4,4'-Diisocyanatodiphenylmethan, 2,4'-Diisocyanatodiphenylmethan, 2,4-Diisocyanatotoluol, 2,6-Diisocyanatotoluol sowie Mischungen aus diesen. Ebenfalls besonders bevorzugte Diisocyanate sind 1 ,6-Hexamethylendiisocyanat, 1-Isocyanato-3,3,5-trimethyl-5-isocyanatomethylcyclohexan (Isophorondiisocyanat) und 4,4'-Diisocyanatodicyclohexylmethan sowie deren Mischungen.

Um Polyurethane mit einem gewissen Verzweigungs- oder Vernetzungsgrad herzustellen, können gegebenenfalls als Komponenten (A2) Polyisocyanate mit Funktionalitäten größer 2 und kleiner 5 in Mengen bis zu 10 Gew.%, bevorzugt bis zu 5 Gew.-% und besonders bevorzugt bis zu 2 Gew.-% bezogen auf das hydrophilierte Polyurethan aus Stufe (I) eingesetzt werden. Diese Isocyanate werden z.B. erhalten, indem man zweiwertige Isocyanate derart miteinander umsetzt, dass ein Teil ihrer Isocyanatgruppen zu Isocyanurat-, Iminooxadiazindion-, Biuret-, Allophanat-, Uretdion- oder Carbodiimidgruppen derivatisiert werden. Dabei können geeignete Polyisocyanate (A2) aliphatische, cycloaliphatische, araliphatische und aromatische Polyisocyanten oder deren Mischungen sein. Bevorzugte Polyisocyanate (A2) sind die Isocyanurat-, Iminooxadiazindion-, Biuret-, Allophanat- und/oder Uretdiongruppen enthaltenden aliphatischen und cycloaliphatischen Produkte.

Als Komponente (B1) werden Polyole mit einem Molekulargewicht von 500 bis 6000, bevorzugt 500 bis 3000 und besonders bevorzugt von 650 bis 2500 eingesetzt, die üblicherweise zur Herstellung von Polyurethanen Verwendung finden. Sie weisen eine OH-Funktionalität von mindestens 1,8 bis 5, bevorzugt 1,9 bis 3 und besonders bevorzugt 1,93 bis 2,0 auf. Es handelt sich zum Beispiel um Polyester, Polyether, Polycarbonate, Polyestercarbonate, Polyacetale, Polyolefine, Polyacrylate und Polysiloxane. Bevorzugt werden α,ω-Diole von Polyestern, Polyethern auf der Basis von Propylenoxid oder Tetrahydrofüran, Polyestercarbonaten und Polycarbonaten eingesetzt. Besonders bevorzugt werden Polyester auf Basis von Adipinsäure, 1,6-Hexandiol und Neopentylglycol eingesetzt.

Geeignete Komponenten (B2) sind kurzkettige Diole (B2') und Polyole (B2") mit Molgewichten unter 500, bevorzugt von 62 bis 135, die als Kettenverlängerer eingesetzt werden. Bevorzugt werden im erfindungsgemäßen Verfahren Diole (B2') eingesetzt. Als Diole (B2') kommen die in der Polyurethanchemie üblichen Diole zum Einsatz, wie z.B. Ethylenglykol, 1,2- und 1,3-Propandiol, 1,3- und 1,4-Butandiol, 1,6-Hexandiol, 2-Ethyl-1,3-hexandiol, Diethylenglykol, Dipropylenglykol, Neopentylglykol, 2,4-Dimethylpentandiol, 2-Ethyl-3-propyl-1,5-pentandiol, 2,2,4-Trimethylpentandiol, Cyclohexandimethanol oder Mischungen derartiger Diole. Bevorzugt sind 1,4-Butandiol, 1,6-Hexandiol und Neopentylglykol. Gegebenenfalls können auch kurzkettige Polyole (B2") wie z.B. Trimethylolpropan, Glycerin, Hexantriol, Pentaerythrit und N,N',N"-Tris-(2-hydroxethyl)-isocyanurat in Mengen bis 4 Gew.-%, bevorzugt bis zu 3 Gew.-% und besonders bevorzugt bis zu 2 Gew.-% bezogen auf das Polyurethan aus Schritt (I) zugesetzt werden. Bevorzugt werden trifunktionelle Komponenten wie z.B. Trimethylolpropan eingesetzt.

Geeignete Komponeten (B3) sind ionische oder potentiell ionische Verbindungen (B3') und nichtionische Verbindungen (B3"), die mindestens eine gegenüber NCO-Gruppen reaktive Gruppe aufweisen. Der Einsatz von ionischen oder potentiell ionischen Verbindungen (B3') im erfindungsgemäßen Verfahren ist bevorzugt. Geeignete Verbindungen (B3') sind z.B. Mono- und Dihydroxycarbonsäuren, Monound Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie z.B. Dimethylolpropionsäure oder Dimethylolbutansäure, Hydroxypivalinsäure, N-(2-Aminoethyl)-β-alanin, 2-(2-Amino-ethylamino)-ethansulfonsäure, Ethylendiamin-propyl- oder Ethylendiaminbutylsulfonsäure, 1,2- oder 1,3-Propylendiamin-β-ethylsulfonsäure, Lysin oder 3,5-Diaminobenzoesäure. Ebenfalls geeignet ist das Hydrophilierungsmittel gemäß Beispiel 1 aus der EP-A 0 916 647 und deren Alkali- und/oder Ammoniumsalze, das Addukt von Natriumbisulfit an Buten-2-diol-1,4, Polyethersulfonat, das propoxylierte Addukt aus 2-Butendiol und NaHSO₃ (z.B. in der DE-A 24 46 440, Seite 5-9, Formel I-III) sowie in kationische Gruppen überführbare Bausteine wie N-Methyldiethanolamin.

Bevorzugte ionische oder potentiell ionische Verbindungen (B3') sind solche, die über Carboxy- und/oder Carboxylat- und/oder Sulfonatgruppen und/oder Amin und/oder Ammoniumgruppen verfügen. Besonders bevorzugte ionische Verbindungen (B3') sind solche, die Carboxylat- und/oder Sulfonatgruppen als ionische oder potentiell ionische Gruppen enthalten, wie die Salze von N-(2-Aminoethyl)-β-alanin, 2-(2-Amino-ethylamino)-ethansulfonsäure oder des Hydrophilierungsmittels gemäß Beispiel 1 aus EP-A 0 916 647 sowie der Dimethylolpropionsäure und Dimethylobuttersäure.

Gegebenenfalls können auch nichtionisch hydrophile Verbindungen (B3") z.B. Polyoxyalkylenether mit mindestens einer Hydroxy- oder Aminogruppe in Mengen bis zu 20 Gew.-%, bevorzugt bis zu 10 Gew.-% und besonders bevorzugt bis zu 5 Gew.-%, bezogen auf das Polyurethan aus Schritt (I), eingesetzt werden. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (II), 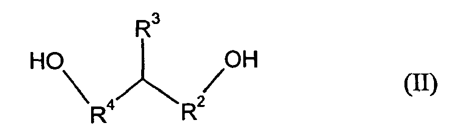 in welcher
- R² und R⁴: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen nicht-hydroxyterminierten Polyester oder bevorzugt Polyether steht. Besonders bevorzugt steht R³ für einen alkoxyterminierten Polyethylenoxidrest.

Bevorzugte Hydrophilierungsmittel (B3") sind monofunktionelle Polyether mit Ethylenoxidgehalten von größer 30 Gew.-%.

Als Komponente (B4) kommen über NH-Gruppen mit Isocyanaten reaktive polyfunktionelle, stickstoffhaltige Verbindungen wie z.B. Polyamine und Alkanolamine in Frage. Geeignet sind Diethylentriamin, Triethylentetramin und 4-Aminomethyl-1,8-octandiamin. Bevorzugt sind difünktionelle primäre oder sekundäre Diamine wie z.B. Ethylendiamin, Propylendiamin, Hexamethylendiamin, 2-Mehtyl-1,5-diaminopentan, Isophorondiamin, p-Xylylendiamin, 4,4'-Diamino-dicyclohexylmethan und 4,4'-Diamino-3,3'-dimethyldicyclohexylmethan oder deren Gemische. Besonders bevorzugt sind Aminoalkohole wie z.B. 2-Aminoethanol, Aminopropanole, 3-Amino-1,2-propandiol, Aminobutanole, 1,3-Diamino-2-propanol, Bis-(2-hydroxypropyl)-amin und Propanolamin 1,1'-Dimethyl-1,1'-dipropyl-2,2'iminodiethanol, 2-[(2-Hydroxyethyl-)-amino-2-methylpropan-1-ol, 1-(2-Hydroxyethyl-)-amino-2-propanol und 3,3'-Diallyloxy-2,2'-dihydroxy-dipropylamin. Ganz besonders bevorzugt sind solche Michaeladdukte, die durch Reaktion bifünktioneller, primärer Amine mit Maleinsäurediestern erhalten werden und als Asparaginsäureester bezeichnet werden. Beschrieben sind solche Asparaginsäureester beispielsweise in der EP-A 403 921, S. 4, Z. 21 - S. 5, Z. 7.

Geeignete, optional einsetzbare, monofünktionelle Verbindungen (B5) sind monofunktionelle Alkohole, Amine und Ammoniak, die in Mengen bis zu 10 Gew.-%, bevorzugt bis zu 8 Gew-% und besonders bevorzugt bis zu 3 Gew.-% bezogen auf das Polyurethan aus Schritt (I) eingesetzt werden können. Als Beispiele für primäre und sekundäre Amine seien Ethylamin, Propylamin, Isopropylamin sowie ihre höheren Homologen, Morpholin, Diethylamin, Diisoprpoylamin, Methylethylamin sowie höhere Homologe genannt. Als Amine sind ebenfalls Additionsverbindungen primärer Amine an vinyloge Systeme wie z.B. (Meth-)acrylate geeignet, wie sie durch Michael-Addition erhalten werden. Insbesondere sind solche Michaeladdukte geeignet, die durch Reaktion monofüktioneller, primärer Amine mit Maleinsäurediestern erhalten werden und als Asparaginsäureester bezeichnet werden. Beschrieben sind solche Asparaginsäureester beispielsweise in der EP-A 403 921, S. 4, Z. 21 - S. 5, Z. 7. Bevorzugt sind als Komponente (B5) monofünktionelle Alkohole wie Methanol, Ethanol, 1-Propanol, 2-Propanol und höhere Homologe sowie deren Mischungen.

Als Komponente (C) sind vinylisch ungesättigte, polymerisierbare Verbindungen einsetzbar. Dabei wird zwischen gegenüber NCO-Gruppen inerten ethylenisch ungesättigten Monomeren (C1) und Zerewitinoff-aktiven H-Atome aufweisenden, ethylenisch ungesättigten Monomeren (C2) unterschieden. Dabei besteht die Komponente (C) aus 50 bis 100 Gew.-%, bevorzugt 60 bis 100 Gew.-% und besonders bevorzugt von 70 bis 100 Gew.-% (C1). Der sich zu 100% ergänzende Teil entspricht der Menge (C2).

Zerewitinoff aktive H-Atome sind Wasserstoffatome, die an einem Sauerstoff-, Schwefel- und/oder Stickstoffatom gebunden sind, wie z.B. -OH, -SH, =NH und -NH₂.

Als Komponente (C1) sind nichtionisch hydrophilierte Acrylate oder Methacrylate, wie z.B. Methoxypolyethylenglycol-acrylat oder -methacrylat oder Bisacrylate oder Bismethacrylate, wie z.B. Hexandioldiacrylat oder -methacrylat, Ethylenglykoldi(meth)acrylate, Oligo- und Polyethylenglykoldi(meth)acrylate geeignet, die in geringen Mengen bis zu 10 Gew.-%, bevorzugt bis zu 6 Gew.-% und besonders bevorzugt bis zu 3 Gew.-% bezogen auf Komponente (C) eingesetzt werden können. Ebenfalls geeignet sind vinylisch ungesättigte, polymerisierbare Monomere wie z.B. Vinylester, Vinylchlorid, Vinylmethylether, Vinylisobutylether, 2-Ethylhexylvinylether, Acrylamide und Methacrylamide. Bevorzugte Monomere sind C₁-C₁₀-Alkylester und C₅-C₁₀-Cycloalkylester der Acryl- und Methacrylsäure wie z.B. Methyl-, Ethyl, n-Propyl-, iso-Propyl-, n-Butyl, iso-Butyl-, tert.-Butyl, Hexyl-, Cyclohexyl-, Isobornyl- und 2-Ethylhexylacrylat oder -methacrylat. Ebenfalls geeignet sind Verbindungen mit weiteren funktionellen Gruppen, wie z.B. Acetoacetoxygruppen. Mischungen der genannten Monomere sind ebenfalls geeignet. Bevorzugt sind weiterhin aromatische Verbindungen wie z.B. Styrol, Methylstyrol, Vinyltoluol, Divinylbenzol oder deren Mischungen.

Als Komponente (C2) sind Verbindungen wie z.B. Itacon-, Malein- oder Fumarsäure sowie Monoester der ungesättigten C₄-C₈-Dicarbonsäuren geeignet. Hierzu zählen auch Sulfonsäurereste, wie z.B. die der 2-Acrylamido-2-methylpropansulfonsäure. Diese Verbindungen oder deren Mischungen können in geringen Mengen bis zu 5 Gew.-%, bevorzugt bis zu 3 Gew.-% und besonders bevorzugt bis zu 2 Gew.-%, bezogen auf die Komponente (C), eingesetzt werden. Bevorzugt sind Acrylsäure und Methacrylsäure, die in geringen Mengen bis zu 5 Gew.-%, bevorzugt bis zu 3 Gew.-% und besonders bevorzugt bis zu 2 Gew.-%, bezogen auf die Komponente (C) eingesetzt werden können. Besonders bevorzugt als Komponente (C2) sind hydroxyfunktionelle Acrylate und Methacrylate oder deren Mischungen, beispielsweise Hydroxyethyl-, Hydroxypropyl-, Hydroxybutylacrylat oder die entsprechenden Methacrylate. Sie werden in Mengen von 0 bis 50 Gew.-%, bevorzugt 0,5 bis 30 Gew.-% und besonders bevorzugt von 1,0 bis zu 20 Gew. %, bezogen auf die Komponente (C), eingesetzt.

Es ist möglich die Polyurethane aus Schritt (I) des erfindungsgemäßen Verfahrens sowohl harnstoffgruppenfrei, als auch harnstoffgruppenhaltig herzustellen.

Bevorzugt ist die Herstellung eines harnstoffgruppenfreien Polyurethans in Schritt (I) des erfindungsgemäßen Verfahrens, in welchem
- 15 bis 65 Gew.-%, bevorzugt 17 bis 55 Gew.-%, besonders bevorzugt 20 bis 50 Gew.-% der Komponente (A1),
- 20 bis 70 Gew.-%, bevorzugt 25 bis 65 Gew.-%, besonders bevorzugt 30 bis 60 Gew.-% der polymere Diole (B1),
- 1 bis 25 Gew.-%, bevorzugt 3 bis 18 Gew.-%, besonders bevorzugt 5 bis 18 Gew.-% der Komponente (B2'),
- 2 bis 15 Gew.-%, bevorzugt 3 bis 12 Gew.-%, besonders bevorzugt 3 bis 10 Gew.-% der Komponente (B3'),
- 0 bis 2,0 Gew.-%, bevorzugt 0,2 bis 2,0 Gew.-%, besonders bevorzugt 0,5 bis 1,5 Gew.-% der Komponente (B5),
eingesetzt werden, wobei sich die genannten Prozentangaben zu 100 ergänzen.

Ebenfalls möglich ist die Herstellung eines harnstoffgruppenhaltigen Polyurethans in Schritt (I) des erfindungsgemäßen Verfahrens, in welchem
- 15 bis 65 Gew.-%, bevorzugt 17 bis 55 Gew.-%, besonders bevorzugt 20 bis 50 Gew.-% der Komponente (A1),
- 20 bis 70 Gew.-%, bevorzugt 25 bis 65 Gew.-%, besonders bevorzugt 30 bis 60 Gew.-% der polymere Diole (B1),
- 1 bis 25 Gew.-%, bevorzugt 3 bis 18 Gew.-%, besonders bevorzugt 5 bis 18 Gew.-% der Komponente (B2'),
- 2 bis 15 Gew.-%, bevorzugt 3 bis 12 Gew.-%, besonders bevorzugt 3 bis 10 Gew.-% der Komponente (B3'),
- 0,1 bis 25 Gew.-%, bevorzugt 0,5 bis 18 Gew.-%, besonders bevorzugt 1,0 bis 10 Gew.-% der Komponente (B4),
- 0 bis 2,0 Gew.-%, bevorzugt 0,2 bis 2,0 Gew.-%, besonders bevorzugt 0,5 bis 1,5 Gew.-% der Komponente (B5)
eingesetzt werden, wobei sich die genannten Prozentangaben zu 100 ergänzen.

Dabei sollte erfindungsgemäß die mittlere Funktionalität der in Schritt (I) eingesetzten Rohstoffe 2,0 betragen, was bedeutet, dass bei optionaler Verwendung von (A2), (B2") und/oder Polyolen (B1) eine äquivalente Menge monofünktioneller Komponenten (B5) zugesetzt werden muss, so dass eine mittlere Funktionalität von 2,0 resultiert. Besonders bevorzugte Zusammensetzungen sind solche, bei denen in Schritt (I) nur bifunktionelle Komponenten eingesetzt werden.

In Schritt (I) des erfindungsgemäßen Verfahrens erfolgt nach, vor oder bevorzugt mit der Zugabe der Komponenten (B) zur Komponente (A) die Zugabe der Komponente (C1), die als Reaktiwerdünner wirkt und mit der die Viskosität der Harzmischung auf ein gewünschtes Niveau abgesenkt werden kann. Dabei werden die gegenüber NCO-Gruppen inerten ethylenisch ungesättigten Monomeren (C1) in Mengen von 6 bis 90 Gew.-%, bevorzugt 10 bis 50 Gew.-%, besonders bevorzugt 15 bis 25 Gew.-% bezogen auf den Harzfestkörper der erfindungsgemäßen Hybriddispersion eingesetzt.

In jedem Fall ist die als Reaktiwerdünner füngierende Menge (C1) so zu bemessen, dass nach der Dispergierung noch eine kontrollierbare Polymerisation in Stufe (III) des erfindungsgemäßen Verfahrens dieser Monomere erfolgen kann, bevor gegebenenfalls weitere Monomere (C) zugegeben werden.

Vor der Dispergierung (Stufe (II)) des erfindungsgemäßen Verfahrens wird bevorzugt in einem Temperaturbereich von 40° bis 95°C, bevorzugt 50°C bis 80°C und besonderes bevorzugt von 50°C bis 70°C dem Polyurethanharz ein Neutralisationsmittel (D) in der Menge zugesetzt, dass theoretisch 50 bis 120 %, bevorzugt 60 bis 105 % und besonders bevorzugt 70 bis 100 % der Säuregruppen neutralisiert sind. Dabei wird angenommen, dass 1 mol zugesetztes Neutralisationsmittel (D) quantitativ ionische Gruppen erzeugt. Das neutralisierte Polymer wird unter heftigem Rühren einer zwischen 10 und 80°C, bevorzugt 20 bis 50°C und besonders bevorzugt 20 bis 40°C - temperierten Wasservorlage zugeführt und damit dispergiert. Es ist ebenfalls möglich das Wasser dem Harz unter heftigem Rühren zuzuführen.

Die Dispergierung (Stufe (II)) des hydrophilen oder hydrophilierbaren Polyurethans aus Stufe (I) des erfindungsgemäßen Verfahrens erfolgt durch Überführung des Polyurethans in Wasser oder Wasser wird der Lösung aus Polyurethan in Monomeren (C1) zugeführt. Die Menge an Wasser wird so bemessen, dass die erfindungsgemäßen Polyurethan-Polyacrylathybrid-Dispersionen einen Festkörpergehalt von 35 bis 60 Gew.-%, bevorzugt 35 bis 50 Gew.-% und besonders bevorzugt von 38 bis 50 Gew.-% aufweisen.

Geeignete Neutralisationsmittel (D) sind alkalische organische und/oder alkalische anorganische Verbindungen. Bevorzugt sind neben wässriger Ammoniak-, Ethylamin- und Dimethylaminlösung, flüchtige primäre, sekundäre und tertiäre Amine, wie z.B. Dimethylethanolamin, Morpholin, N-Methylmorpholin, Piperidin, Diethanolamin, Triethanolamin, Diisopropylamin, 2-Amino-2-methylpropanol und 2-N,N-Dimethylamino-2-methylpropanol oder Gemische dieser Verbindungen. Besonders bevorzugt sind gegenüber Isocyanaten unreaktive tertiäre Amine wie z.B. Triethylamin, Diisopropylethylamin und N-Methylmorpholin. Gemische aus Neutralisationsaminen sind ebenfalls geeignet.

Gegebenenfalls können vor oder nach der Dispergierung des Polyurethans in Wasser weitere gegenüber NCO-Gruppen inerten ethylenisch ungesättigten Monomeren (C1) und gegebenenfalls Zerewitinoff-aktive H-Atome aufweisende, ethylenisch ungesättigten Monomeren (C2), zugegeben werden.

In Stufe (III) des erfindungsgemäßen Verfahrens werden die Monomere (C) durch Zulauf eines Initiators (E) polymerisiert. Bevorzugt werden während der Stufe (in) weitere Monomere (C) zudosiert und polymerisiert. Besonders bevorzugt werden zunächst die in Stufe (I) zugesetzten Monomere (C1) polymerisiert und anschließend weitere Monomere (C) zugesetzt und polymerisiert. Das Verhältnis von Polyurethan-Polymer zu Polyacrylat-Polymer sollte im Bereich von 20 : 80 bis 90 : 10, bevorzugt 25 : 75 bis 80 : 20 und besonders bevorzugt 30 : 70 bis 70 : 30 liegen. Gegebenenfalls kann vor oder während Schritt (III) weiteres Wasser zugesetzt werden.

In Stufe (III) des erfindungsgemäßen Verfahrens wird die Dispersion, je nach eingesetztem Initiator (E) auf 30 bis 95°C, bevorzugt 50 bis 90°C und besonders bevorzugt 50 bis 85°C und bei Verwendung eines Redoxinitiatorsystems auf 30 bis 70°C, bevorzugt 40 bis 60°C temperiert, bevor der Initiator im Sinne einer Emulsionspolymerisation so zudosiert wird, dass die Reaktionsgeschwindigkeit kontrollierbar ist. Solche Reaktionen sind dem Fachmann aus dem Stand der Technik bekannt und sind z.B. in Houben-Weyl, Methoden der org. Chemie, Band E 20/I, Makromolekulare Stoffe, Georg-Thieme-Verlag, Stuttgart, 1987. S 218-226, beschrieben.

Der Initiator (E) wird bevozugt über das Ende (in der Regel 30 bis 90 Minuten) des Monomerzulaufs hinweg dosiert, um auf diese Weise eine vollständige Umsetzung der Monomere zu gewährleisten.

Beispiele geeigneter Polymerisationsinitiatoren (E) sind freie Radikale bildende Initiatoren wie Dialkylperoxide, z.B. Di-tert.-Butylperoxid oder Dicumylperoxid; Hydroperoxide oder tert. - Butylhydroperoxid; Perester, wie tert.-Butylperbenzoat, tert.-Butylper-3,5,5-trimethyl-hexanoat oder tert.-Butylper-2-ethylhexanoat; Kalium-, Natrium- oder Ammoniumperoxodisulfat; Azodinitrile wie z.B. Azobisisobutyronitril oder 4,4'-Azo-bis-4-cyanpentansäure; C-C-spaltende Initiatoren wie Benzpinakolsilylether oder Kombinationen eines nicht oxidierenden Initiators mit Wasserstoffperoxid. Bevorzugt werden wasserlösliche Initiatoren verwendet, wie z.B. Kalium-, Natrium- oder Ammoniumperoxodisulfat oder 4,4'-Azo-bis-4-cyanpentansäure.

Um eine vorzeitige, thermisch initiierte Polymerisation des zugesetzten Reaktiwerdünners (C1) in Schritt (I) des erfindungsgemäßen Verfahrens zu unterdrücken, werden Polymerisationsinhibitoren (F) in einer Menge von 0,05 bis 0,6 Gew.-%, bevorzugt 0,1 bis 0,5 Gew.-% bezogen auf die Menge polymerisierbarerer Komponenten (C1) zugesetzt. Solche Inhibitoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-ß-naphthylamin, N-Phenylethanoldiamin, Dinitrobenzol, Picrinsäure, p-Nitrosodimethyl-anilin, Diphenylnitrosamin, Phenole, wie p-tert-Butyl-brenzcatechin, 2,5-Di-tert.-amylhydrochinon, Nitroxylverbindungen, p-Alkoxyphenole, Di-tert.-butylhydrochinon, Tetramethylthiuramdisulfid, 2-Mercaptobenzthiazol und Dimethyldithiocarbaminsäure-natriumsalz. Bevorzugt sind Phenole.

Es ist ebenfalls möglich das erfindungsgemäße Verfahren in Form des Saat-Zulaufverfahrens durchzuführen, wobei zunächst 1/10 bis 1/30 der Polyurethan-Dispersion aus Schritt (II), gegebenenfalls mit einer weiteren Menge Wasser, vorgelegt und mit einem Teil des Initiators (E) polymerisiert wird. Im Anschluss daran, oder zeitlich versetzt, wird die restliche PU-Dispersion aus Schritt (II), gegebenenfalls mit weiteren Monomeren (C1) und (C2) parallel zum zulaufenden Initiator (E) bei Polymerisationstemperaturen von 30 bis 95°C, bevorzugt 50 bis 90°C und besonders bevorzugt 50 bis 85°C, bei Verwendung eines Redoxinitiatorsystems von 30 bis 70°C, bevorzugt 40 bis 60°C zudosiert.

In einer bevorzugten Ausführungsform des erfindungsgemäßen Verfahrens wird in der Stufe (I) die Komponente (A1) vorgelegt und mit einer Mischung enthaltend die Komponenten (B1), (B2'), (B3') sowie gegebenenfalls (B4), (B5) und gegebenenfalls den Komponenten (B2"), (B3") unter wasserfreien Bedingungen in einem Temperaturbereich von 50 bis 100°C, bevorzugt von 50 bis 90°C und besonders bevorzugt von 50 bis 80°C in Gegenwart von (C1) umgesetzt. Die Komponenten (B) können auch einzeln und in beliebiger Reihenfolge zugesetzt werden. Die Menge der Komponenten (B) wird jeweils so bemessen, dass nach vollständiger Reaktion der OH/NH/NH₂-Gruppen, theoretisch keine überschüssigen NCO- und OH/NH/NH₂-Gruppen erhalten bleiben.

Besonders bevorzugt erfolgt die Herstellung des Polyurethans in Stufe (I) des erfindungsgemäßen Verfahrens zweistufig, indem zunächst die Isocyanatkomponente (A1) mit einem molaren Unterschuss an Komponenten (B1), (B3') und gegebenenfalls (B2') oder einem Teil der Menge an (B2') in Gegenwart von (C1) zu einem NCO-Prepolymer mit einem NCO-Gehalt von 0,2 bis 4 Gew.-%, bevorzugt 0,5 bis 3 Gew.-% und besonders bevorzugt von 0,6 bis 2,0 Gew.-% umgesetzt werden. In einem zweiten, sich anschließenden Schritt wird das NCO-Prepolymer mit (B2') oder dem restlichen Teil der Menge an Komponente (B2') vollständig umgesetzt, so dass das NCO: OH/NH/NH₂ Verhältnis 1: 1 beträgt

Für den Fall, dass ein harnstoffgruppenhaltiges Polyurethan hergestellt werden soll, ist es bevorzugt die Komponenten, die als aminofünktionelle Verbindungen (B3"), (B4) und (B5) eingesetzt werden können, im zweiten Schritt der Polyurethanherstellung zuzugeben.

Zur Herstellung von Beschichtungsmitteln werden die erfindungsgemäßen Polyurethan-Polyacrylat-Hybriddispersionen entweder allein oder in Kombination mit anderen wässrigen Bindemitteln eingesetzt. Solche wässrigen Bindemittel können z.B. aus Polyester-, Polyacrylat, Polyepoxid- oder Polyurethanpolymeren aufgebaut sein. Auch die Kombination mit strahlenhärtbaren wässrigen Bindemitteln, wie sie z.B. grundlegend in der EP-A 0 753 531 (S. 2, Z. 44 - S. 6, Z. 49), EP-A 0 872 502 (S. 3, Z. 4 - S. 12, Z. 19) und EP-A 0 942 022 (S. 4, Z. 18 - S. 17, Z. 57) beschrieben sind, ist möglich.

Es ist weiterhin möglich, vor der Applikation des Beschichtungsmittels, enthaltend die erfindungsgemäße Polyurethan-Polyacrylat-Hybriddispersionen, Vernetzer zuzusetzen. Als Vernetzer geeignet sind, z.B. Di- oder Polycarbodiimide, Di- oder Polyaziridine. Bevorzugt sind hydrophile und hydrophobe Polyisocyanatvernetzer. Außerdem ist es möglich den erfindungsgemäßen Polyurethan-Polyacrylat-Hybriddispersionen blockierte Polyisocyanate zuzusetzen und diese unter thermischen Bedingungen auszuhärten. Zudem kann eine thermische Härtung der Polyurethan-Polyacrylat-Hybriddispersionen auch durch Verwendung von Melaminharzen erreicht werden. Eine Kombination aus Melaminharzen und blockierten Polyisocyanaten ist ebenfalls möglich.

Zur Herstellung der Beschichtungsmittel können die erfindungsgemäßen Polyurethan-Polyacrylat-Hybriddispersionen als solche oder in Kombination mit den aus der Lacktechnologie bekannten Hilfs- und Zusatzmitteln, wie z. B. Füllstoffen, Pigmenten, Lösungsmitteln, Verlaufshilfsmitteln verwendet werden.

Gegenstand der Erfindung ist auch die Verwendung der erfindungsgemäßen Polyurethan-Polyacrylat-Hybriddispersionen zur Beschichtung von Substraten. Geeignete Substrate sind ausgewählt aus der Gruppe Kunststoffe, Metalle, Gläser, Papier, Hölzer, Textilien, Leder, Filz, mineralische Gegenstände oder bereits beschichtete Untergründe. Bevorzugte Substrate sind Holz und Kunststoff. Die Beschichtung der Substrate erfolgt durch Rakeln, Tauchen Gießen, Sprühen, Spritzen oder Pinseln und anschließenden Trocknen bei 10 bis 100°C, bevorzugt 20 bis 80°C.

Ein weiterer Gegenstand der Erfindung ist die Verwendung der erfindungsgemäßen Polyurethan-Polyacrylat-Hybriddispersionen zur Herstellung eines abziehfähigen Lacks, der z.B. zum temporären Schutz von Glas, Kunststoffen oder Lacken eingesetzt werden kann. Bevorzugt werden zu diesem Zweck harnstoffgruppenfreie Polyurethan-Polyacrylat-Hybriddispersionen eingesetzt.

Die erfindungsgemäßen Polyurethan-Polyacrylat-Hybriddispersionen können ebenfalls zur Herstellung von Lacken oder Klebstoffen verwendet werden.

### Beispiele

### Beispiel 1 (erfindungsgemäß):

226,1 g eines Polyesters aus Adipinsäure, 1,6 Hexandiol, und Neopentylglykol (1,6 Gewichtsteile Hexandiol, 1 Gewichtsteil Neopentylglykol) mit einem Molekulargewicht von 1700 g/mol, 21,9 g Dimethylolpropionsäure und 11,2 g 1,4-Butandiol werden bei 80°C im Vakuum für 1 Stunde entwässert. Die Lösung wird auf 60°C abgekühlt bevor 15,6 g Butylglykol und eine Monomermischung (I) bestehend aus 78,0 g Butylacrylat, 58,0 Methylmethacrylat, 21,6 g Styrol und 0,6 g 2,6 Di-tert.butyl-4-methylphenol (BHT) unter Rühren zugesetzt wird. Nach Homogenisierung werden 134,5 g Isophorondiisocyanat innerhalb von 5 min addiert. Die Temperatur wird bei 70°C gehalten, bis der theoretische NCO-Gehalt von 1,8 % erreicht ist. Dann werden 10,7 g 1,4-Butandiol zugegeben und die Reaktion bis zum Erreichen des NCO von Null fortgeführt. Anschließend werden 16,5 g Triethylamin und nach 10 minütigem Einrühren werden 1089 g 35°C warmes Wasser innerhalb von 10 Minuten unter heftigem Rühren zugegeben. Die Dispersion wird für weitere 10 Minuten bei Mischtemperatur homogenisiert, bevor sie auf 50°C erwärmt wird und 2,8 g einer Lösung (I), gelöst in 157,5 g Wasser parallel zu 160,2 g einer Lösung (II) addiert wird. Im Anschluss daran werden bei 50°C 15,9 g einer Lösung (III) innerhalb von 5 Minuten zugesetzt und für 30 Minuten verrührt, bevor 143,2 g der Lösung (III) parallel zu der Monomermischung (II) innerhalb von 1 Stunde bei 50°C zugegeben werden. Eine weitere Stunde wird bei 50°C nachgerührt, auf Raumtemperatur abgekühlt und filtriert.
- Lösung (I):: 0,4 g Eisen-(II)-sulfat und 0,38 g Trilon® B (Na-Salz des EDTA, Fa. BASF AG, Ludwigshafen, DE) gelöst in 77 g Wasser
- Lösung (II):: 3,2 g Trigonox® A-W 70 (tert.-Butylhydroperoxid, Fa. Akzo Nobel, Düren, DE) gelöst in 157,5 g Wasser
- Lösung (III):: 1,6 g Rongalit® C (Na-Salz der Hydroxymethansulfinsäure, Fa. BASF AG, Ludwigshafen, DE) gelöst in 157.5 g Wasser
- Monomermischung (II):: 64,7 g Styrol, 233,9 g Butylacrylat, 173,9 g Methylmethacrylat

- Festkörpergehalt:: 38,8 %
- Mittlere Teilchengröße (MTG):: 51 um (Laserkorrelationsspektroskopie (LKS))
- pH-Wert:: 7,5

### Beispiel 2 (erfindungsgemäß):

Die Herstellung erfolgt bis zur Addition des Wasser wie unter Beispiel 1 angegeben. Die Dispersion wird für weitere 10 Minuten bei Mischtemperatur homogenisiert bevor sie auf 75°C erwärmt wird und 13,2 g einer 5 %igen wässrigen Ammoniumperoxodisulfatlösung innerhalb von 5 Minuten zugetropft werden. Die Mischung wird 30 Minuten bei 75°C gehalten bevor innerhalb einer Stunde 63,6 g einer 1%igen wässrigen Ammoniumperoxodisulfatlösung parallel zur Monomermischung (II) bei 75°C zugegeben werden. Schließlich wird eine weitere Stunde bei 50°C nachgerührt, auf Raumtemperatur abgekühlt und filtriert.
- Monomermischung (II):: 64,7 g Styrol, 233,9 g Butylacrylat, 173,9 g Methylmethacrylat

- Festkörpergehalt:: 39,4 %
- MTG (LKS):: 134nm
- pH-Wert:: 7,4

**Tabelle 1: Erfindungsgemäße Beispiele 3 bis 7 (Herstellung analog Bsp. 1)**

| **Beispiel** | **3** | **4** | **5** | **6** | **7** |
|---|---|---|---|---|---|
| Polyester | 226,1 g | 226,1 g | 267,8 g | 282,2 g | 282,2 g |
| DMPS | 21,9 g | 21,9 g | 35,2 g | 25,5 g | 25,5 g |
| 1,4-Butandiol (1. Teil) | 11,2 g | 15,2 g | 28,7 g | 14,2 g | 14,2 g |
| Butylglykol | 15,6 g | 5,2 g | 39,9 g | - | - |

| *Monomermischung (I)* | | | | | |
|---|---|---|---|---|---|
| Butylacrylat | 28,8 g | 76,8 g | 82,7 g | 87,8 g | 67,4 g |
| Methylmethacrylat | 21,4 g | 57,1 g | 61,5 g | 65,2 g | 86,0 g |
| Styrol | 8,0 g | 21,2 g | 22,9 g | 24,3 g | 23,9 g |
| BHT | 0,2 g | 0,6 g | 0,2 g | 0,7 g | 0,7 g |
| IPDI | 134,5 g | 134,5 g | 269,4 g | 140,3 g | 140,3 g |
| 1,4-Butandiol (2. Teil) | 10,7 g | 10,7 g | 27,3 g | 10,6 g | 10,6 g |
| Triethylamin | 16,5 g | 16,5 g | 26,5 g | 19,2 g | 19,2 g |

| *Monomermischung (II)* | | | | | |
|---|---|---|---|---|---|
| Styrol | 26,3 g | 63,8 g | | 61,6 g | 59,8 g |
| Butylacrylat | 94,9 g | 230,7 g | | 222,7 g | 168,3 g |
| Methylmethacrylat | 70,6 g | 171,5 g | | 165,6 g | 214,8 g |
| Lösung (I) // in x g H₂O | 1,1 g // 63,9 | 2,8 g // 124 | 0.8 g // 41,8 | 2,7 g // 150 | 2,7 g // 148 |
| Lösung (II) | 65,2 g | 127,0 g | 42,6 g | 153,0 g | 150,6 g |
| Lösung (III) | 64,6 g | 125,5 g | 42,2 g | 151,5 g | 149,1 g |
| | | | | | |
| Wasser | 867,0 g | 1230,0 g | 1102,0 g | 1225,0 g | 1225,0 g |
| Festkörpergehalt [%] | 38,1 | 39,8 | 39,8 | 40,3 | 39,8 |
| MTG | 53 nm | 129 nm | 144 nm | 130 nm | 122 nm |
| pH-Wert | 7,5 | 7,8 | 7,8 | 7,8 | 7,7 |

### Beispiel 8 (erfindungsgemäß):

226,1 g eines Polyesters aus Adipinsäure, 1,6 Hexandiol, und Neopentylglykol (1,6 Gewichtsteile Hexandiol, 1 Gewichtsteil Neopentylglykol), mit einem Molekulargewicht von 1700 g/mol, 21,9 g Dimethlyolpropionsäure und 11,2 g 1,4-Butandiol werden bei 80°C im Vakuum für 1 Stunde entwässert. Die Lösung wird auf 60°C abgekühlt bevor 15,6 g Butylglykol und eine Monomermischung (I) aus 39,9 g Butylacrylat, 65,1 g Methylmethacrylat und 0,5 g 2,6 Di-tert.-butyl-4-methylphenol (BHT) unter rühren zugesetzt werden. Nach Homogenisierung werden 134,5 g Isophorondiisocyanat innerhalb von 5 min zugegeben. Die Temperatur wird bei 70°C gehalten, bis der theoretische NCO-Gehalt von 1,8 % erreicht ist. Dann werden 10,7 g 1,4-Butandiol zugegeben und die Reaktion bis zum Erreichen des NCO von Null fortgerührt und anschließend 16,5 g Triethylamin addiert. Die Mischung wird unter heftigem Rühren innerhalb von 5 min zu 1680,0 g auf 35°C temperiertem Wasser gegeben. Die Dispersion wird für weitere 10 Minuten bei Mischtemperatur homogenisiert bevor sie auf 60°C erwärmt und innerhalb von 5 Minuten mit 48,2 g einer Lösung (I) versetzt wird. Die Mischung wird 30 Minuten bei 60°C verrührt und im Anschluss daran werden innerhalb einer Stunde parallel 192,8 g der Lösung (I) und 734,8 g der Monomermischung (II) addiert. Schließlich wird eine weitere Stunde bei 70°C nachgerührt, auf Raumtemperatur abgekühlt und filtriert.
- Lösung (I):: 4,8 g 4,4'-Azo-bis-4-cyanpentansäure in 236,2 g Wasser lösen und mit Triethanolamin auf pH 8,2 einstellen
- Monomermischung (II):: 279,2 g Butylacrylat, 455,6 g Methylmethacrylat
- Festkörpergehalt:: 40,0 %
- MTG (LKS): 37 nm
- pH-Wert: 8,5

### Beispiel 9 (erfindungsgemäß):

225,9 g eines Polyesters aus Adipinsäure, 1,6 Hexandiol, und Neopentylglykol (1,6 Gewichtsteile Hexandiol, 1 Gewichtsteil Neopentylglykol), mit einem Molekulargewicht von 1700 g/mol, 21,9g Dimethylolpropionsäure und 5,4g 1,3-Butandiol werden bei 80°C im Vakuum für 1 Stunde entwässert. Die Lösung wird auf 60°C abgekühlt; 30,8 g Butylglykol und Monomermischung (I) werden unter Rühren zugesetzt und nach Homogenisierung 134,5 g Isophorondiisocyanat innerhalb von 5 min addiert. Die Temperatur wird bei 70°C gehalten, bis der theoretische NCO-Gehalt von 1,8 % erreicht ist. Dann werden 65,6 g eines Asparaginsäureesters, hergestellt aus 1 mol 4,4'-Diaminodicyclohexylmethan und 2 mol Maleinsäurediethylester (Herstellung analog DE-A 197 17 427, Bsp. 5) zugesetzt und die Reaktion bis zum Erreichen des NCO von Null fortgeführt, bevor 16,5 g Triethylamin addiert und für 15 Minuten eingerührt werden. Im Anschluss daran wird die Mischung unter heftigem Rühren innerhalb von 5 min zu 1134,0 g bei 35°C temperiertem Wasser gegeben. Die Dispersion wird für weitere 10 Minuten bei Mischtemperatur homogenisiert, bevor sie auf 50°C erwärmt wird. Innerhalb von 5 Minuten werden 314 g einer Lösung (I) parallel zu 314 g einer Lösung (II) addiert. Im Anschluss daran werden bei 50°C 15,4 g einer Lösung (III) innerhalb von 5 Minuten zugesetzt und für 30 Minuten verrührt, bevor weitere 141,7 g der Lösung (III) parallel zu der Monomermischung (II) innerhalb von 1 Stunde bei 50°C zugegeben werden. Schließlich wird eine weitere Stunde bei 70°C nachgerührt, auf Raumtemperatur abgekühlt und filtriert.
- Lösung (I):: 2,0 g Eisen-(II)-sulfat und 2,0 g Trilon® B (Fa. BASF AG, Ludwigshafen, DE) gelöst in 310 g Wasser
- Lösung (II):: 4,3 g Trigonox® AW 70 (Fa. Akzo Nobel, Düren, DE) gelöst in 310 g Wasser
- Lösung (III):: 2,3 g Rongalit® C (Fa. BASF AG, Ludwigshafen, DE) gelöst in 155 g Wasser
- Monomermischung (1):: 22,8 g Butylmethacrylat, 108,0 g Methylmethacrylat und 0,4 g 2,6 Di-tert.-butyl-4-methylphenol (BHT)
- Monomermischung (II):: 57,7 g Butylmethacrylat, 219,9 g Methylmethacrylat

- Festkörpergehalt:: 32,0 %
- MTG (LKS): 44 nm
- pH-Wert: 7,7

### Vergleichsbeispiel 10:

282,2 g eines Polyesters aus Adipinsäure, 1,6 Hexandiol, und Neopentylglykol (1,6 Gewichtsteile Hexandiol, 1 Gewichtsteil Neopentylglykol), mit einem Molekulargewicht von 1700 g/mol, 24,3 g Dimethlyolpropionsäure und 9,5 g 1,4-Butandiol werden bei 80°C im Vakuum für 1 Stunde entwässert. Die Lösung wird auf 60°C abgekühlt, die Monomermischung (I) aus 23,1 g Styrol, 83,6 g Butylacrylat, 62,2 g Methylmethacrylat und 0,7 g 2,6 Di-tert.-butyl-4-methylphenol (BHT) werden unter Rühren zugesetzt, bevor 134,5 g Isophorondiisocyanat innerhalb von 5 min addiert wird. Die Temperatur wird bei 70°C gehalten, bis der theoretische NCO-Gehalt von 2,1 % erreicht ist. Dann werden 16,5 g Triethylamin zugegeben. Zu der Mischung wird unter heftigem Rühren innerhalb von 5 min 1229,3 g auf 35°C temperiertes Wasser gegeben. Die Dispersion wird für weitere 5 Minuten bei Mischtemperatur homogenisiert bevor eine Lösung aus 1,8 g Hydrazinhydrat, 5,1 g Ethylendiamin und 51,4 g Wasser zugesetzt wird. Bei 50°C wird solange gerührt, bis kein NCO mehr nachweisbar ist (IR-Methode). Hiernach werden innerhalb von 5 Minuten 3,0 g der Lösung (I), gelöst in 143 g Wasser und 146,7 g einer Lösung (II), zugesetzt. Die Mischung wird 30 Minuten bei 50°C verrührt und im Anschluss daran werden innerhalb von 10 Minuten 17 g der Lösung (III) addiert und für 30 Minuten verrührt. Anschließend werden bei 50°C innerhalb von einer Stunde parallel 153,6 g der Lösung (III) und 506,2 g einer Monomermischung (II) (69,4 g Styrol, 250,9 g Butylacrylat und 186,5 g Methylmethacrylat) addiert. Dann wird eine weitere Stunde wird bei 50°C nachgerührt, auf Raumtemperatur abgekühlt und filtriert.
- Lösung (I):: 0,32 g Eisen-(II)-sulfat und 1,52 g Trilon® B (Fa. BASF AG, Ludwigshafen, DE) gelöst in 310 g Wasser
- Lösung (II):: 3,4 g Trigonox® AW 70 (Fa. Akzo Nobel, Düren, DE) gelöst in 143,2 g Wasser
- Lösung (III):: 1,7 g Rongalit® C (Fa. BASF AG, Ludwigshafen, DE) gelöst in 169 g Wasser

- Festkörpergehalt:: 38,0 %
- MTG(LKS):: 171nm
- pH-Wert:: 8,0

### Vergleichsbeispiel 11:

226,1 g eines Polyesters aus Adipinsäure, 1,6 Hexandiol, und Neopentylglykol (1,6 Gewichtsteile Hexandiol, 1 Gewichtsteil Neopentylglykol), mit einem Molekulargewicht von 1700 g/mol und 21,9 g Dimethlyolpropionsäure werden bei 80°C im Vakuum für 1 Stunde entwässert, bevor 15,2 g 1,4 - Butandiol und 5,2 g Butylglykol zugegeben werden. Die Lösung wird auf 60°C abgekühlt, die Monomermischung (I) aus 20,7 g Styrol, 74,8 g Butylacrylat, 55,6 g Methylmethacrylat und 0,6 g 2,6 Di-tert.-butyl-4-methylphenol (BHT) werden unter Rühren zugesetzt; anschließend werden 134,5 g Isophorondiisocyanat innerhalb von 5 min addiert. Die Temperatur wird bei 70°C gehalten, bis der theoretische NCO-Gehalt von 1,8 % erreicht ist. Dann werden 16,5 g Triethylamin zugegeben. Zu der Mischung wird unter heftigem Rühren innerhalb von 5 min 1092 g auf 35°C temperiertes Wasser gegeben. Die Dispersion wird für weitere 5 Minuten bei Mischtemperatur homogenisiert bevor eine Lösung aus 1,4 g Hydrazinhydrat, 4,0 g Ethylendiamin und 40 g Wasser zugesetzt wird. Bei 50°C wird solange gerührt, bis kein NCO Mehr nachweisbar ist. (IR-Methode). Hiernach werden innerhalb von 5 Minuten 2,7 g der Lösung (I) gelöst in 131,2 g Wasser und 134,1 g einer Lösung (II), zugesetzt. Die Mischung wird 30 Minuten bei 50°C verrührt und im Anschluss daran werden innerhalb von 10 Minuten 15 g der Lösung (III) addiert und für 30 Minuten verrührt. Anschließend werden bei 50°C innerhalb von einer Stunde parallel 138,6 g der Lösung (III) und 453 g der Monomermischung (II) (62,1 g Styrol, 224,4 g Butylacrylat und 166,8 g Methylmethacrylat). Eine weitere Stunde wird bei 50°C nachgerührt, auf Raumtemperatur abgekühlt und filtriert.

### Zusammensetzung der Lösungen I-III s. Bsp. 9

- Festkörpergehalt:: 39,7 %
- MTG (LKS):: 94 nm
- pH-Wert:: 7,5

### Anwendungstechnische Beispiele

### Beispiel 12 (Abziehfähigkeit):

100 g des Produkts aus Beispiel 1, Beispiel 4 oder Beispiel 6 werden mit 0,5 g eines marktüblichen silikonfreien Untergrundbenetzungsmittels (Hydropalat® 110, Cognis & Inks, Düsseldorf, DE) versetzt und verrührt. Die Mischung wird auf eine mit Aceton gereinigte und getrocknete Glasplatte aufgerakelt (210 µ Nassaufzug). Bei Raumtemperatur lässt man 10 Minuten ablüften, bevor für weitere 10 Minuten bei 80°C forciert getrocknet wird. Nach 24 h kann das elastische Produkt einfach, ohne einzureißen von der Glasplatte abgelöst werden. Noch einfacher lässt sich die nach dem gleichen Verfahren auf einem Klarlack (2K-Polyurethan Klarlack der Fa. Audi aus der Serienlackieung) applizierte Beschichtung entfernen. Die manuell bestimmte Reißdehnung der Beschichtung beträgt bei Verwendung der nach Beispiel 1 erhaltenen Dispersion 1 350% und bei den nach Beispielen 4 und 6 erhaltenen Dispersionen 300 %.

## Patentansprüche

1. Verfahren zur Herstellung von wässrigen, emulgator- und lösemittelfreien Polyurethan-Polyacrylat-Hybriddispersionen, enthaltend die Schritte
(I) Herstellung eines hydrophilen oder hydrophilierbaren Polyurethans durch Umsetzung einer oder mehrerer Isocyanat-Komponenten (A) mit einer oder mehreren Komponenten (B), enthaltend
(B1) ein oder mehrere Di- oder Polyole mit einem Molekulargewicht von 500 bis 6000 und einer OH-Funktionalität von 1,8 bis 5,
(B2) ein oder mehrere niedermolekularen Di- oder Polyole des Molekulargewichtsbereichs von 62 bis 400 und einer OH-Funktionalität größer gleich 2 als Kettenverlängerer,
(B3) ein oder mehrere hydrophile Verbindungen mit ionischen und/oder potentiell ionischen Gruppen und/oder nichtionischen Gruppen, die mindestens eine gegenüber NCO-Gruppen reaktive Gruppe aufweisen,
(B4) gegebenenfalls ein oder mehrere Polyamine und/oder Alkanolamine des Molekulargewichtsbereichs von 60 bis 300 und einer NH-Funktionalität von größer gleich 2,
(B5) gegebenenfalls monofunktionellen Verbindungen des Molekulargewichtsbereichs von 17 bis 350,
in Anwesenheit von gegenüber NCO-Gruppen inerten ethylenisch ungesättigten Monomeren (C1) unter Berücksichtigung, dass die Komponenten (A) und (B) so eingesetzt werden, dass ein Verhältnis von NCO-Gruppen zu OFLNH/NH₂-Gruppen von 1 : 1 resultiert,
(II) anschließend Dispergierung des Polyurethans aus (I) in Wasser und
(III) Emulsionspolymerisation von Monomeren (C), enthaltend gegenüber NCO-Gruppen inerte ethylenisch ungesättigte Monomere (C1) und gegebenenfalls Zerewitinoff-aktive H-Atome aufweisende, ethylenisch ungesättigte Monomere (C2).

2. Verfahren gemäß Anspruch 1, **dadurch gekennzeichnet, dass** als IsocyanatKomponente (A) in Schritt (I) Diisocyanate (A1) ausgewählt aus der Gruppe 4,4'-Diisocyanatodiphenylmethan, 2,4'-Diisocyanatodiphenylmethan, 2,4-Diisocyanatotoluol, 2,6-Diisocyanatotoluol sowie deren Mischungen eingesetzt werden.

3. Verfahren gemäß Anspruch 1, **dadurch gekennzeichnet, dass** als IsocyanatKomponente (A) in Schritt (I) Diisocyanate (A1) ausgewählt aus der Gruppe 1,6-Hexamethylendiisocyanat, 1-Isocyanato-3,3,5-trimethyl-5-isocyanatomethylcyclohexan (Isophorondiisocyanat), 4,4'-Diisocyanatodicyclohexylmethan sowie deren Mischungen eingesetzt werden.

4. Verfahren gemäß einem oder mehreren der Ansprüche 1 bis 3, **dadurch gekennzeichnet, dass** Komponente (B1) α,ω-Diole von Polyestern, Polyethern auf der Basis von Propylenoxid oder Tetrahydrofuran, Polyestercarbonaten und Polycarbonaten sind.

5. Verfahren gemäß Anspruch 4, **dadurch gekennzeichnet, dass** Komponente (B1) ein Polyester auf Basis von Adipinsäure, 1,6-Hexandiol und Neopentylglykol ist.

6. Verfahren gemäß einem oder mehreren der Ansprüche 1 bis 5, **dadurch gekennzeichnet, dass** die Komponente (B2) kurzkettige Diole (B2') sind.

7. Verfahren gemäß einem oder mehreren der Ansprüche 1 bis 6, **dadurch gekennzeichnet, dass** die Komponente (B3) ionische oder potentiell ionische Verbindungen (B3') sind.

8. Verfahren gemäß einem oder mehreren der Ansprüche 1 bis 7, **dadurch gekennzeichnet, dass** die Komponente (C) aus 50 bis 100 Gew.-% (C1) besteht.

9. Polyurethan-Polyacrylat-Hybriddispersionen erhältlich gemäß Anspruch 1.

10. Polyurethan-Polyacrylat-Hybriddispersionen gemäß Anspruch 9, **dadurch gekennzeichnet, dass** das Polyurethan harnstoffgruppenfrei ist.

11. Beschichtungsmittel enthaltend die Polyurethan-Polyacrylat-Hybriddispersionen gemäß Anspruch 9.

12. Verwendung der Polyurethan-Polyacrylat-Hybriddispersionen gemäß Anspruch 9 zur Beschichtung von Substraten.

13. Verwendung der Polyurethan-Polyacrylat-Hybriddispersionen gemäß Anspruch 10 zur Herstellung eines abziehfähigen Lacks.

14. Verwendung der Polyurethan-Polyacrylat-Hybriddispersionen gemäß Anspruch 9 zur Herstellung von Lacken oder Klebstoffen.

## Claims

1. Process for the preparation of aqueous, emulsifier-free and solvent-free polyurethane/polyacrylate hybrid dispersions, comprising the following steps:
(I) preparation of a hydrophilic or hydrophilizable polyurethane by reacting one or more isocyanate components (A) with one or more components (B) comprising
(B1) one or more diols or polyols with molecular weights of 500 to 6000 and OH functionalities of 1.8 to 5,
(B2) one or more low-molecular diols or polyols with molecular weights in the range from 62 to 400 and OH functionalities greater than or equal to 2, as chain extenders,
(B3) one or more hydrophilic compounds with ionic and/or potentially ionic groups and/or nonionic groups, which contain at least one group reactive to NCO groups,
(B4) optionally one or more polyamines and/or alkanolamines with molecular weights in the range from 60 to 300 and NH functionalities greater than or equal to 2,
(B5) optionally monofunctional compounds with molecular weights in the range from 17 to 350,
in the presence of ethylenically unsaturated monomers (C1) inert to NCO groups, with the proviso that components (A) and (B) are used in proportions such that the resulting ratio of NCO groups to OH/NH/NH₂ groups is 1:1,
(II) followed by dispersion of the polyurethane from (I) in water and
(III) emulsion polymerization of monomers (C) comprising ethylenically unsaturated monomers (C1) inert to NCO groups, and ethylenically unsaturated monomers (C2) optionally containing Zerewitinoff-active H atoms.

2. Process according to Claim 1, **characterized in that** isocyanate component (A) used in step (I) consists of diisocyanates (A1) selected from the group comprising 4,4'-diisocyanatodiphenylmethane, 2,4'-diisocyanatodiphenylmethane, 2,4-diisocyanatotoluene, 2,6-diisocyanatotoluene and mixtures thereof.

3. Process according to Claim 1, **characterized in that** isocyanate component (A) used in step (I) consists of diisocyanates (A1) selected from the group comprising 1,6-hexamethylene diisocyanate, 1-isocyanato-3,3,5-trimethyl-5-isocyanatomethylcyclohexane (isophorone diisocyanate), 4,4'-diisocyanatodicyclohexylmethane and mixtures thereof.

4. Process according to one or more of Claims 1 to 3, **characterized in that** component (B1) consists of α,ω-diols of polyesters, polyethers based on propylene oxide or tetrahydrofuran, polyestercarbonates and polycarbonates.

5. Process according to Claim 4, **characterized in that** component (B1) is a polyester based on adipic acid, 1,6-hexanediol and neopentyl glycol.

6. Process according to one or more of Claims 1 to 5, **characterized in that** component (B2) consists of short-chain diols (B2').

7. Process according to one or more of Claims 1 to 6, **characterized in that** component (B3) consists of ionic or potentially ionic compounds (B3').

8. Process according to one or more of Claims 1 to 7, **characterized in that** component (C) comprises 50 to 100 wt.% of (C1).

9. Polyurethane/polyacrylate hybrid dispersions obtainable according to Claim 1.

10. Polyurethane/polyacrylate hybrid dispersions according to Claim 9, **characterized in that** the polyurethane is free of urea groups.

11. Coating agent containing the polyurethane/polyacrylate hybrid dispersions according to Claim 9.

12. Use of the polyurethane/polyacrylate hybrid dispersions according to Claim 9 for the coating of substrates.

13. Use of the polyurethane/polyacrylate hybrid dispersions according to Claim 10 for the preparation of a peelable lacquer.

14. Use of the polyurethane/polyacrylate hybrid dispersions according to Claim 9 for the preparation of lacquers or adhesives.

## Revendications

1. Procédé de production de dispersions hybrides polyuréthanes-polyacrylates aqueuses, exemptes d'émulsifiants et de solvants, comportant les étapes de
(I) production d'un polyuréthane hydrophile ou hydrophilisable par mise en réaction d'un ou de plusieurs composants isocyanate (A) avec un ou plusieurs composants (B), contenant
(B1) un ou plusieurs diols ou polyols dont le poids moléculaire est compris entre 500 et 6 000 et dont la fonctionnalité OH est comprise entre 1,8 et 5,
(B2) un ou plusieurs diols ou polyols de bas poids moléculaire compris dans la plage s'étendant de 62 à 400 et dont la fonctionnalité OH est égale ou supérieure à 2, en tant qu'agent prolongateur de chaîne,
(B3) un ou plusieurs composés hydrophiles possédant des groupes ioniques et/ou potentiellement ioniques et/ou des groupes non ioniques, qui présentent au moins un groupe réactif vis-à-vis des groupes NCO,
(B4) le cas échéant, une ou plusieurs polyamines et/ou un ou plusieurs amino-alcools dont le poids moléculaire est compris dans la plage s'étendant de 60 à 300 et dont la fonctionnalité NH est égale ou supérieure à 2,
(B5) le cas échéant, des composés monofonctionnels dont le poids moléculaire est compris dans la plage s'étendant de 17 à 350,
en présence de monomères (C1) insaturés de façon éthylénique, inertes vis-à-vis des groupes NCO en veillant à ce que les composants (A) et (B) soient mis en oeuvre de manière à obtenir un rapport de 1:1 entre les groupes NCO et les groupes OH/NH/NH₂.
(II) ensuite, dispersion du polyuréthane issu de l'étape (I) dans l'eau et
(III) polymérisation en émulsion de monomères (C), contenant des monomères (C1) insaturés de façon éthylénique, inertes vis-à-vis des groupes NCO et, le cas échéant, des monomères (C2) insaturés de façon éthylénique, présentant des atomes d'hydrogène actif selon Zerewitinoff.

2. Procédé selon la revendication 1, **caractérisé en ce que** l'on met en oeuvre comme composant isocyanate (A) dans l'étape (I), des diisocyanates (A1) sélectionnés parmi le groupe se composant du 4,4'-diisocyanatodiphénylméthane, du 2,4'-diisocyanatodiphénylméthane, du 2,4-diisocyanatotoluène, du 2,6-diisocyanatotoluène ainsi que des mélanges de ceux-ci.

3. Procédé selon la revendication 1, **caractérisé en ce que** l'on met en oeuvre comme composant isocyanate (A) dans l'étape (I), des diisocyanates (A1) sélectionnés parmi le groupe se composant du 1,6-hexaméthylènediisocyanate, du 1-isocyanato-3,3,5-triméthyl-5-isocyanatométhylcyclohexane (isophoronediisocyanate), du 4,4'-diisocyanatodicyclohexylméthane ainsi que des mélanges de ceux-ci;

4. Procédé selon une ou plusieurs des revendications 1 à 3, **caractérisé en ce que** le composant (B1) est constitué d'α,ω-diols de polyesters, de polyéthers à base d'oxyde de propylène ou de tétrahydrofurane, de polyestercarbonates et de polycarbonates.

5. Procédé selon la revendication 4, **caractérisé en ce que** le composant (B1) est un polyester à base d'acide adipique, de 1,6-hexanediol et de néopentylglycol.

6. Procédé selon une ou plusieurs des revendications 1 à 5, **caractérisé en ce que** le composant (B2) est constitué de diols à chaîne courte (B2').

7. Procédé selon une ou plusieurs des revendications 1 à 6, **caractérisé en ce que** le composant (B3) est constitué de composés ioniques ou potentiellement ioniques (B3').

8. Procédé selon une ou plusieurs des revendications 1 à 7, **caractérisé en ce que** le composant (C) est constitué de 50 à 100 % en poids de (C1).

9. Dispersions hybrides de polyuréthanes-polyacrylates pouvant être obtenues selon la revendication 1.

10. Dispersions hybrides de polyuréthanes-polyacrylates selon la revendication 9, **caractérisées en ce que** le polyuréthane est exempt de groupes urée.

11. Compositions de revêtement contenant les dispersions hybrides de polyuréthanes-polyacrylates selon la revendication 9.

12. Utilisation des dispersions hybrides de polyuréthanes-polyacrylates selon la revendication 9 pour le revêtement de substrats.

13. Utilisation des dispersions hybrides de polyuréthanes-polyacrylates selon la revendication 10 pour la production d'une peinture ou d'un vernis éliminable.

14. Utilisation des dispersions hybrides de polyuréthanes-polyacrylates selon la revendication 9 pour la production de peintures/vernis ou d'adhésifs.
